# EUROPÄISCHE PATENTSCHRIFT

(11) **EP 2 481 944 B1**
(45) Veröffentlichungstag und Bekanntmachung des Hinweises auf die Patenterteilung: **24.01.2018**
(21) Anmeldenummer: 12152645.3
(22) Anmeldetag: 26.01.2012
(51) Int. Cl.: F16D 65/18

(54) **Selbstverstärkende Scheibenbremse**
Self-reinforcing disc brake
Frein à disque à auto-amplification

(30) Priorität: 27.01.2011 DE 102011009541
(43) Veröffentlichungstag der Anmeldung: 01.08.2012
(73) Patentinhaber: KNORR-BREMSE Systeme für Nutzfahrzeuge GmbH, 80809 München (DE)
(72) Erfinder: Baumgartner, Johann, 85368 Moosburg (DE); Seidenschwang, Matthias, 81249 München (DE); Trimpe, Robert, 82234 Weßling (DE); Camilo-Martinez, José, 82008 Unterhaching (DE)
(74) Vertreter: Mattusch, Gundula

(56) Entgegenhaltungen:
- EP-A1- 2 014 947
- DE-A1-102008 036 033
- US-A- 2 981 376
- US-A- 5 219 048

## Beschreibung

Die Erfindung betrifft eine selbstverstärkende Scheibenbremse gemäß dem Oberbegriff des Anspruchs 1.

Selbstverstärkende Scheibenbremsen, wie sie z.B. aus der DE 10 2008 004 806 A1 bekannt sind, nutzen bei einer Bremsung auf den Bremsbelag wirkende Umfangskräfte zur Unterstützung der Zuspannkraft, die von einem elektromechanischen Antrieb oder einem pneumatisch betätigten Bremszylinder über eine Zuspanneinrichtung aufgebracht wird. Dadurch kann der Antrieb erheblich kleiner dimensioniert werden.

Diese Selbstverstärkung wird durch eine Selbstverstärkungseinrichtung erreicht, die mit der Zuspanneinrichtung in Wirkverbindung steht. Dabei weist die Selbstverstärkungseinrichtung der bekannten Scheibenbremse zwei Spreizlagerungen auf, die zwischen einer in einem fahrzeugseitigen, also ortsfesten Bremsträger verschieblich geführten Führungsplatte und einem zuspannseitigen Bremsbelag angeordnet sind, wobei an jeder Spreizlagerung ein Druckstempel angreift, die Bestandteil einer Nachstelleinrichtung zum Ausgleich eines Lüftspiels sind.

Zwischen den beiden Druckstempeln ist ein direkt oder indirekt mit dem Bremsbelag verbundener Bremsstempel angeordnet, als Bestandteil der Zuspanneinrichtung.

Der Bremsbelag besteht aus einer Belagträgerplatte und einem daran befestigten, gegen eine Bremsscheibe pressbaren Reibbelag. Der Bremsstempel kann unmittelbar an der Belagträgerplatte befestigt sein. Denkbar ist aber auch, eine Druckplatte vorzusehen, die sich an der Belagträgerplatte abstützt und an der der Bremsstempel angeschlossen ist.

Jede Spreizlagerung besteht entweder aus zwei mit Rampen versehenen Keillagern, zwischen denen ein Wälzlager, insbesondere eine Kugel angeordnet ist, oder einem Keillager, während die Kugel dann in einer gegenüberliegenden Kalotte gehalten ist.

Die Führungsplatte, die Spreizlagerungen, der Bremsbelag und gegebenenfalls die Druckplatte sind außerhalb eines Innenraumes des Bremsengehäuses angeordnet, in dem der Bremsstempel, die Druckstempel sowie weitere Funktionsteile der Zuspann- und Nachstelleinrichtung beherbergt sind.

Allerdings ergeben sich bei einem notwendigen, verschleißbedingten Austausch der Bremsbeläge erhebliche Handhabungsprobleme, da die genannte Anordnung der Bauteile zu einer schwierigen Montage- bzw. Demontagesituation führt.

Beim Austausch des entsprechenden Bremsbelages muss beispielsweise ein damit korrespondierendes Aufnahmeprofil in der Druckplatte gereinigt und auf Beschädigungen hin kontrolliert werden, was, wenn überhaupt, nur mit einem erheblichen Aufwand möglich ist. Überdies sind die Spreizlagerungen sowie die Anbindung des Bremsstempels an der Belagdruckplatte nur sehr schwer zugänglich, so dass eine Inspektion dieser für die Funktion der Bremse wesentlichen Bauteile eine Teil-Demontage erfordert. Da es sich um hoch belastete Bauteile der Bremse handelt, ist deren Inspektion bei jedem Belagwechsel aus Sicherheitsgründen erforderlich und im Fall von Beschädigungen deren Austausch unumgänglich.

Insgesamt ist der Serviceablauf im Vergleich zu Scheibenbremsen ohne Selbstverstärkung wesentlich schwieriger und zeitraubender, woraus sich inakzeptable hohe Kosten ergeben.

Eine gattungsgemäße selbstverstärkende Scheibenbremse ist weiterhin in der EP 2 014 947 A1 offenbart.

Der Erfindung liegt die Aufgabe zugrunde, eine Scheibenbremse der gattungsgemäßen Art so weiterzuentwickeln, dass eine einfachere und kostengünstigere Inspektion sowie ein notwendiger Austausch funktionsrelevanter Bauteile möglich wird.

Diese Aufgabe wird durch eine Scheibenbremse mit den Merkmalen des Anspruchs 1 gelöst.

Durch die Erfindung können die relevanten Bauteile, die zu einer Baueinheit vormontiert sind, bei einem Bremsbelagwechsel komplett ausgetauscht werden. Damit ergibt sich hinsichtlich der Servicekosten eine Situation wie sie bei herkömmlichen Scheibenbremsen ohne Selbstverstärkung gegeben ist. Aufwändige Inspektionsarbeiten, wie beschrieben, entfallen nun. Zusätzlich wird dann die Scheibenbremse mit einem neuwertigen Selbstverstärkungsmechanismus weiterbetrieben.

Wie ein Kostenvergleich überraschend gezeigt hat, betragen die Mehrkosten der ausgetauschten Komponenten nur einen Bruchteil der ansonsten anfallenden Wartungs- und Reparaturkosten.

Die Druckplatte oder, wenn auf diese verzichtet wird, die Belagträgerplatte, weist eine Aufnahme auf, in der der Bremsstempel gehalten ist, wobei die Aufnahme so ausgebildet ist, dass ein Aufschieben auf den zugeordneten Endbereich des Bremsstempels möglich ist. Bevorzugt ist ein mit der Aufnahme und dem Bremsstempel korrespondierendes Arretierelement vorgesehen, um einen Formschluss in Zuspannrichtung und entgegengesetzt zu erreichen.

Weiterhin ist diese Aufnahme so gestaltet, dass einerseits Druckkräfte von etwa 100 kN problemlos in die Druck- bzw. Belagträgerplatte eingeleitet und andererseits Rückzugskräfte von ca. 2 kN übertragen werden können.

Das genannte Arretierelement besteht aus einer Federklammer, die den Bremsstempel mit einer Vorspannkraft gegen die Druckplatte drückt, wobei diese Vorspannkraft größer ist als die maximal erforderliche Rückzugskraft. Andererseits soll die Federklammer eine ausreichende Elastizität aufweisen, um Schwenkbewegungen des Bremsstempels von etwa bis 5° zu ermöglichen.

Durch die Federklammer ist die Verbindung des Bremsstempels mit der Druckplatte spielfrei ausgeführt, so dass Leerwege bei einer Betätigung der Bremse vermieden werden.

Während, wie erwähnt, der Bremsstempel in Zuspann- bzw. Löserichtung mit der Druckplatte, d.h., mit der gebildeten Baueinheit verbunden ist, besteht eine solche Verbindung der Druckstempel nicht. Durch entsprechende Konfiguration der dem Bremsbelag zugewandten Stirnseite sowie der Anlagefläche an der Baueinheit, kann jedoch eine verdrehsichere Kontaktierung gewährleistet werden, so dass eine Nachstellung zum Ausgleich des Lüftspiels möglich ist, bei der eine Relativdrehung einer in ein Außengewinde des Druckstempels eingreifenden Gewindehülse wirksam ist. Hierdurch wird eine Zustellung der Führungsplatte und damit des Bremsbelages in Richtung der Bremsscheibe erreicht.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: zwei Ausführungsbeispiele einer erfindungsgemäßen Baueinheit, jeweils in einem Halbschnitt
- Figur 2: ein weiteres Ausführungsbeispiel der Erfindung, in einer halbseitigen, geschnittenen Draufsicht als Teilausschnitt einer Scheibenbremse
- Figur 3: eine Einzelheit der Scheibenbremse gemäß dem Ausschnitt III in Figur 2.

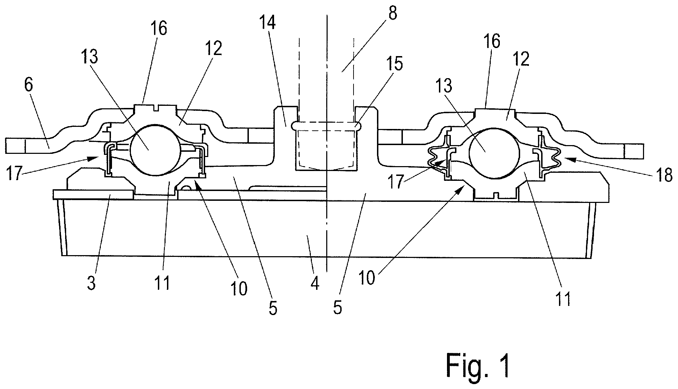

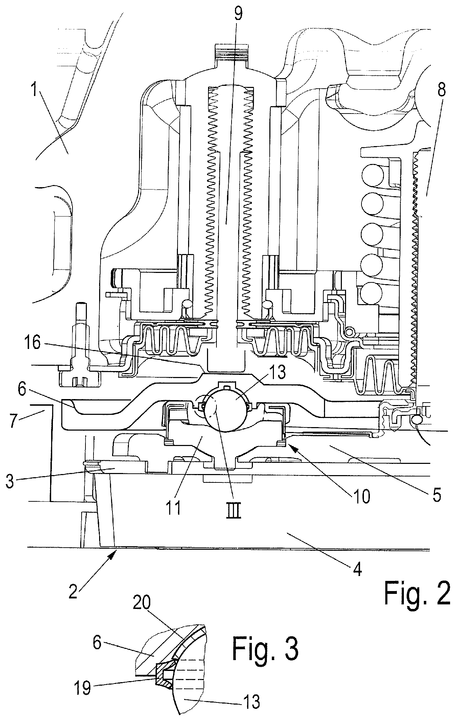

In der Figur 2 ist in einem Halbschnitt der prinzipielle Aufbau einer selbstverstärkenden Scheibenbremse dargestellt, mit einem an einem ortsfesten Bremsträger 7 gehaltenen Bremssattel 1, einem zuspannseitigen Bremsbelag 2 und einem reaktionsseitigen, die gegen eine nicht dargestellte Bremsscheibe pressbar sind. Im Beispiel ist lediglich der zuspannseitige Bremsbelag 2 dargestellt, der in der Figur 2 ebenso wie in der Figur 1 linksseitig aus einer Belagträgerplatte 3 und einem Reibbelag 4 besteht.

Zum Zuspannen ist eine Zuspanneinrichtung in Form eines Drehhebels 21 und eines Bremsstempels 8 vorgesehen, über den der Bremsbelag 2 in axialer Richtung, bezogen auf die Drehachse der Bremsscheibe, bewegbar ist.

Weiter ist eine Selbstverstärkungseinrichtung vorgesehen, die zwei Spreizlager 10 aufweist, zwischen denen der Bremsstempel 8 angeordnet ist und denen jeweils ein Druckstempel 9 zugeordnet ist, die mit einer Nachstelleinrichtung zur verschleißbedingten Nachstellung des Bremsbelages 2 in Eingriff stehen.

In der Figur 1 ist eine gemäß der Erfindung vormontierte Baueinheit dargestellt, umfassend eine Führungsplatte 6, die in Zuspannrichtung verschiebbar im Bremsträger 7 gelagert ist, die Spreizlagerungen 10 und den Bremsbelag 2.

Die Spreizlagerungen 10 bestehen in den in der Figur 1 gezeigten Beispielen jeweils aus zwei sich gegenüberliegenden Keillagern 11, 12, die beidseitig, in Umfangsrichtung der Bremsscheibe ansteigende Rampen aufweisen, sowie eine in den Keillagern 11, 12 positionierte Kugel 13, die in ungebremster Stellung der Scheibenbremse in den gebildeten Senken der Keillager 11, 12 einliegt.

Die Funktion der Selbstverstärkung bei einer Bremsung ist in der bereits genannten DE 10 2008 004 806 A1 dargestellt, so dass auf diese Ausführungen verwiesen wird.

In der linken Hälfte der Darstellung in Figur 1 ist erkennbar, dass das dem Bremsbelag 2 zugewandte Keillager 11 in eine Druckplatte 5 eingelassen ist, die an der Belagträgerplatte 3 anliegt und eine Aufnahme 14 aufweist, in der der Bremsstempel 8 in axialer Richtung gehalten ist.

In der rechten Hälfte der Figur 1 ist eine Variante dargestellt, bei der die Druckplatte 5 gleichzeitig als Belagträgerplatte fungiert, d.h., der Reibbelag 4 ist unmittelbar auf die Druckplatte 5 aufgebracht.

Anstelle einer separaten Herstellung der Keillager 11 können dessen Rampen auch direkt eingebracht sein, so dass die Druckplatte 5 und das Keillager 11 einstückig ausgebildet sind.

Die Abdichtung der Spreizlagerung 10 erfolgt über Dichtungshülsen 17, die auf die belagseitigen Keillager 11 aufgepresst sind und mit ihren dem Bremsbelag 2 abgewandten Stirnseiten an den gegenüberliegenden Keillagern 12 dichtend anliegen. Um die Dichtwirkung zu verbessern, können die Dichtungshülsen 17 an diesen Stirnflächen auch mit einem elastischen Material versehen sein. Prinzipiell reicht jedoch eine rein metallische Abdichtung.

Die Dichthülsen 17 werden bei der Montage zunächst mit einem zu großen Überstand auf die Keillager 11 aufgepresst, so dass sie erst beim Zusammenfügen mit der Führungsplatte 6 und den darin befindlichen Keillagern 12 sowie den dazwischen angeordneten Kugeln 13 in ihre endgültige Einbauposition gepresst werden. Auf diese Weise wird ein vollständiger Toleranzausgleich erzielt, wobei mit der erforderlichen Aufpresskraft gleichzeitig die Dichtungspressung vorgegeben ist.

Für den Normalbetrieb ist die Anordnung von Dichthülsen 17 alleine ausreichend. Bei einer besonders starken Schmutzbeanspruchung sind, wie in der rechten Hälfte der Figur 1 zu erkennen, zusätzlich Faltenbälge 18 vorgesehen, die endseitig an den beiden Keillagern 11, 12 befestigt sind.

Eine Befestigung der der Führungsplatte 6 zugeordneten Keillager 12 erfolgt durch Einpressen oder Verschweißen, so dass die Keillager 12 verdrehsicher angeordnet sind.

Vor allem bei der Ausführungsvariante, in der auf den Faltenbalg 18 verzichtet wird, kann das jeweilige Keillager 12 auch direkt in die Führungsplatte 6 durch Prägen oder einen vergleichbaren Umformungsvorgang, eingearbeitet sein.

Auf der dem Bremsbelag 2 abgewandten Seite weist jedes Keillager 12 (Figur 1) bzw. die Führungsplatte 6 (Figur 2) eine Druckfläche 16 auf, an der in Funktionsstellung der Baueinheit der zugeordnete Druckstempel 9 mit einer Stirnfläche anliegt. Neben einer zur Druckkraftübertragung ausreichend dimensionierten flächigen Auflage ist die Druckfläche 16 mit einem zur Verdrehsicherung des Druckstempels 9 geeigneten Aufnahmeprofil versehen, das eine von der Kreisform abweichende Kontur oder eine andere geeignete Profilierung der Druckfläche aufweisen kann, beispielsweise einen oder mehrere Schlitze, eine Axialverzahnung, ein Innenprofil oder dergleichen.

Wie insbesondere die Figur 1 sehr deutlich wiedergibt, ist der Bremsstempel 8, der gestrichelt dargestellt ist, durch eine Federklammer 15 fixiert, die den Bremsstempel 8 mit einer Vorspannkraft gegen die Druckplatte 5 drückt.

Dabei ist die Federklammer 15 bevorzugt als U-förmiger Bügel ausgeführt, der in die Aufnahme 14 parallel zur Bremsbelagreibfläche in ein Aufnahmeprofil eingeschoben ist.

In einer alternativen Ausführungsvariante wird die Federklammer 15 in die zentrale Aufnahme nicht, wie dargestellt, von der Seite in einen vorgearbeiteten Schlitz eingeschoben, sondern mit dem Bremsstempel 8 auf die der Bremsscheibe abgewandte Stirnfläche der Aufnahme 14 aufgelegt und dort durch eine Schraubkappe fixiert.

Um die Baueinheit für einen einfachen Transport sowie eine problemlose Handhabung zusammenzuhalten, wird entweder die Federklammer 15 oder ein speziell als Transportsicherung vorgesehenes, ähnlich gestaltetes Halteelement so in das Aufnahmeprofil für die Federklammer 15 eingeschoben, dass es beidseitig die Führungsplatte 6 auf der dem Bremsbelag 2 abgewandten Seite übergreift und mit einer ausreichenden elastischen Vorspannkraft die Baueinheit zusammenhält.

Anstelle des vorhandenen Aufnahmeprofils in der Aufnahme 14 kann z.B. auch am Außendurchmesser der Aufnahme 14 zusätzlich ein Profil eingebracht sein oder eine andere geeignete Transportsicherung verwandt werden.

In dem in der Figur 2 gezeigten Beispiel weist die Spreizlagerung 10 lediglich ein Keillager 11 auf, das in der Druckplatte 5 gehalten ist, während die Kugel 13 gegenüberliegend in einer kalottenförmigen Lagerschale 20 (Figur 3) einliegt, die aus Gründen einer verringerten Temperaturbelastung in einer angepassten Aufnahme der Führungsplatte 6 positioniert ist.

In der Figur 3 ist in einem vergrößerten Teilausschnitt gezeigt, dass die Lagerschale 20 durch einen Dichtring 19 gegen Eindringen von Schmutz und andererseits gegen Austreten von Schmiermittel geschützt ist, wobei der Dichtring in die Führungsplatte eingelassen ist und so auch eine Haltefunktion für die Lagerschale 20 und die Kugel 13 bildet. Denkbar ist aber auch, den Dichtring 19, der mit Dichtlippen an der Kugel anliegt, direkt in die Lagerschale 20 zu integrieren.

### Bezugszeichenliste

1 Bremssattel
2 Bremsbelag
3 Belagträgerplatte
4 Reibbelag
5 Druckplatte
6 Führungsplatte
7 Bremsträger
8 Bremsstempel
9 Druckstempel
10 Spreizlagerung
11 Keillager
12 Keillager
13 Kugel
14 Aufnahme
15 Federklammer
16 Druckfläche
17 Dichthülse
18 Faltenbalg
19 Dichtring
20 Lagerschale
21 Drehhebel

## Patentansprüche

1. Selbstverstärkende Scheibenbremse, mit einem an einem ortsfesten Bremsträger (7) befestigbaren Bremssattel (19, einem zuspannseitigen und einem reaktionsseitigen Bremsbelag (2), einer mit einer Zuspanneinrichtung in Wirkverbindung stehenden Selbstverstärkungseinrichtung, mit mindestens einer Spreizlagerung (10), die zwischen einer im Bremsträger (7) verschiebbar gelagerten Führungsplatte (6) und dem zuspannseitigen Bremsbelag (2) angeordnet ist, sowie einer Nachstelleinrichtung zum Ausgleich eines verschleißbedingten Lüftspiels, die einen der Spreizlagerung (10) zugeordneten Druckstempel (9) aufweist, wobei die Zuspanneinrichtung mit einem am zuspannseitigen Bremsbelag (2) direkt oder indirekt angreifenden Bremsstempel (8) versehen ist, **dadurch gekennzeichnet, dass** die Führungsplatte (6), die Spreizlagerung (10) und der Bremsbelag (2) als Baueinheit vormontiert sind, wobei der Bremsbelag (2) oder eine daran anliegende Druckplatte (5) als Bestandteil der vormontierten Baueinheit lösbar mit dem Bremsstempel (8) verbunden ist, und wobei der Bremsstempel am Bremsbelag (2) oder der Druckplatte (5) durch eine lösbare Federklammer (15) oder eine Schraubkappe gehalten ist, die mit einer Aufnahme (14) der Druckplatte (5) oder des Bremsbelages (2) korrespondiert.

2. Scheibenbremse nach Anspruch 1, **dadurch gekennzeichnet, dass** der Druckstempel (9) stirnseitig an der Führungsplatte (6) oder einem damit fest verbundenen Teil anliegt.

3. Scheibenbremse nach Anspruch 1 oder 2, **dadurch gekennzeichnet, dass** der Druckstempel (9) gegenüber der Führungsplatte (6) verdrehfest gehalten ist.

4. Scheibenbremse nach einem der vorhergehenden Ansprüche, **dadurch gekennzeichnet, dass** die Federklammer (15) elastisch vorgespannt in ein Aufnahmeprofil des Bremsstempels (8) und/oder der Aufnahme (14) eingeschoben ist.

5. Scheibenbremse nach einem der vorhergehenden Ansprüche, **dadurch gekennzeichnet, dass** die Federklammer (15) oder die Schraubkappe die Führungsplatte (6) übergreift und die Baueinheit im nicht eingebauten Zustand zusammenhält.

6. Scheibenbremse nach einem der vorhergehenden Ansprüche, **dadurch gekennzeichnet, dass** die Spreizlagerung (10) zumindest ein Keillager (11) aufweist, das fest mit der Druckplatte (5) oder einer einen Reibbelag (4) des Bremsbelages (2) tragenden Belagträgerplatte (3) verbunden ist oder einstückig mit der Druckplatte (5) oder der Belagträgerplatte (3) ausgebildet ist.

7. Scheibenbremse nach einem der vorhergehenden Ansprüche, **dadurch gekennzeichnet, dass** zwei Keillager (11, 12) sich gegenüberliegend vorgesehen sind, zwischen denen ein Wälzkörper, vorzugsweise eine Kugel (13) angeordnet ist, wobei das dem Druckstempel (9) zugeordnete Keillager (12) fest mit der Führungsplatte (6) verbunden oder an diese angeformt ist.

8. Scheibenbremse nach einem der vorhergehenden Ansprüche, **dadurch gekennzeichnet, dass** der zwischen den Keillagern (11, 12) gebildete Raum außenseitig durch eine Dichthülse (17) abgedichtet ist.

9. Scheibenbremse nach einem der vorhergehenden Ansprüche, **dadurch gekennzeichnet, dass** die Dichthülse (17) außenseitig von einem Faltenbalg (18) überdeckt ist, der endseitig an den beiden Keillagern (11, 12) befestigt ist.

10. Scheibenbremse nach einem der vorhergehenden Ansprüche, **dadurch gekennzeichnet, dass** die Verdrehsicherung des Druckstempels (9) gegenüber der Führungsplatte (6) bzw. der Spreizlagerung (10) durch Formschluss erfolgt, wobei die aneinander liegenden Kontaktflächen jeweils ineinander greifende Profilierungen aufweisen.

## Claims

1. Self-reinforcing disc brake, with a brake calliper (19) that can be attached to a positionally fixed brake carrier (7), a brake lining (2) on the tightening side and on the reaction side, a self-reinforcing device in functional connection with a tightening device, with at least one spreading bearing (10) arranged between a guide-plate (6) mounted and able to move in the brake carrier (7) and the brake lining (2) on the tightening side, and an adjustment device for compensating an air gap produced by wear, which comprises a pressure ram (9) associated with the spreading bearing (10), wherein the tightening device is provided with a brake ram (8) that engages directly or indirectly with the brake lining (2) on the tightening side, **characterised in that** the guide-plate (6), the spreading bearing (10) and the brake lining (2) are preassembled as a structural unit, wherein the brake lining (2) or a pressure plate (5) in contact with it is connected detachably as part of the said preassembled structural unit, and wherein the brake ram is held onto the brake lining (2) or the pressure plate (5) by a detachable spring clamp (15) or a screw-on cap, which corresponds with a recess (14) of the pressure plate (5) or the brake lining (2).

2. Disc brake according to Claim 1, **characterised in that** the pressure ram (9) makes contact at its end with the guide-plate (6) or with a component solidly fixed thereto.

3. Disc brake according to Claims 1 or 2, **characterised in that** the pressure ram (9) is held in a rotationally fixed manner relative to the guide-plate (6).

4. Disc brake according to any of the preceding claims, **characterised in that** the spring clamp (15) is pushed with elastic pre-stress into a receiving profile of the brake ram (8) and/or the recess (14).

5. Disc brake according to any of the preceding claims, **characterised in that** the spring clamp (15) or the screw-on cap spans across the guide-plate (6) and holds together the structural unit in its condition before mounting.

6. Disc brake according to any of the preceding claims, **characterised in that** the spreading bearing (10) comprises at least one wedge bearing (11), which is solidly fixed to the pressure plate (5) or to a lining support plate (3) that supports a friction pad (4) of the brake lining (2), or which is made integrally as one piece with the pressure plate (5) or the lining support plate (3).

7. Disc brake according to any of the preceding claims, **characterised in that** two wedge bearings (11, 12) opposite one another are provided, between which a rolling element, preferably a ball (13) is arranged, such that the wedge bearing (12) associated with the pressure ram (9) is solidly attached to, or formed on the guide-plate (6).

8. Disc brake according to any of the preceding claims, **characterised in that** the space formed between the wedge bearings (11, 12) is sealed on the outside by a sealing sleeve (17).

9. Disc brake according to any of the preceding claims, **characterised in that** the sealing sleeve (17) is covered on the outside by a bellows (18), whose ends are attached to the two wedge bearings (11, 12).

10. Disc brake according to any of the preceding claims, **characterised in that** the pressure ram (9) is secured against rotation relative to the guide-plate (6) or the spreading bearing (10) by interlocking means, such that the surfaces in contact with one another have corrugations that engage each in the other.

## Revendications

1. Frein à disque à auto amplification, comprenant un étrier (19) de frein pouvant être fixé sur un support (7) de frein à poste fixe, une garniture (2) de frein du côté du serrage et une garniture (2) de frein du côté de la réaction, un dispositif d'auto amplification en liaison active avec un dispositif de serrage, comprenant au moins un palier (10) à écartement, qui est disposé entre un plateau (6) de guidage monté coulissant dans le support (7) de frein et la garniture (2) de frein du côté du serrage, ainsi qu'un dispositif de rattrapage de jeu pour compenser un jeu de garniture dû à l'usure, qui a un poinçon (9) associé au palier (10) à écartement, le dispositif de serrage étant pourvu d'un piston (8) de frein attaquant directement ou indirectement la garniture (2) de frein du côté du serrage, **caractérisé en ce que** le plateau (6) de guidage, le palier (10) à écartement et la garniture (2) de frein sont prémontés sous la forme d'une unité de construction, la garniture (2) de frein ou un plateau (5) d'application d'une pression s'y appliquant étant, en tant que partie constitutive de l'unité de construction prémontée, reliés de manière amovible au piston (8) de frein et dans lequel le piston de frein est maintenu sur la garniture (2) de frein ou le plateau (5) d'application d'une pression par une chape (15) de ressort amovible ou par un bouchon fileté, qui correspond à un logement (14) du plateau (5) d'application d'une pression ou de la garniture (2) de frein.

2. Frein à disque suivant la revendication 1, **caractérisé en ce que** le poinçon (9) s'applique du côté frontal au plateau (6) de guidage ou à une partie, qui y est reliée fixement.

3. Frein à disque suivant la revendication 1 ou 2, **caractérisé en ce que** le poinçon (9) est maintenu fixe en torsion par rapport au plateau (6) de guidage.

4. Frein à disque suivant l'une des revendications précédentes, **caractérisé en ce que** la chape (15) à ressort est insérée en étant précontrainte élastiquement dans un profilé de réception du piston (8) de frein et/ou du logement (14).

5. Frein à disque suivant l'une des revendications précédentes, **caractérisé en ce que** la chape (15) à ressort ou le bouchon fileté chevauche le plateau (6) de guidage et maintient l'unité de construction en l'état non monté.

6. Frein à disque suivant l'une des revendications précédentes, **caractérisé en ce que** le palier (10) à écartement a au moins un palier (11) en coin, qui est relié fixement au plateau (5) d'application d'une pression ou à un plateau (3) de support de garniture portant une garniture (4) de friction de la garniture (2) de frein ou est constitué d'une seule pièce avec le plateau (5) d'application d'une pression ou avec le plateau (3) de support de garniture.

7. Frein à disque suivant l'une des revendications précédentes, **caractérisé en ce qu'**il est prévu en opposition deux paliers (11, 12) en coin entre lesquels est monté un corps de roulement, de préférence une bille (13), le palier (12) en coin associé au poinçon (9) étant relié fixement au plateau (6) de guidage ou étant formé sur celui-ci.

8. Frein à disque suivant l'une des revendications précédentes, **caractérisé en ce que** l'espace formé entre les paliers (11, 12) en coin est rendu étanche vis-à-vis de l'extérieur par une douille (17) d'étanchéité.

9. Frein à disque suivant l'une des revendications précédentes, **caractérisé en ce que** la douille (17) d'étanchéité est recouverte du côté extérieur d'un soufflet (18), qui est fixé du côté de l'extrémité aux deux paliers (11, 12) en coin.

10. Frein à disque suivant l'une des revendications précédentes, **caractérisé en ce que** le poinçon (9) est empêché de se tordre par rapport au plateau (6) de guidage ou au palier (10) à écartement par une complémentarité de forme, les surfaces de contact, se trouvant l'une sur l'autre, ayant chacune des profilages s'interpénétrant.
